# EUROPÄISCHE PATENTANMELDUNG

(11) **EP 1 760 052 A1**
(43) Veröffentlichungstag der Anmeldung: **07.03.2007**
(21) Anmeldenummer: 06017484.4
(22) Anmeldetag: 23.08.2006
(51) Int. Cl.: C03C 27/04, C03C 23/00, B60J 10/00

(54) **Verfahren zur Verbindung einer Fahrzeugscheibe mit einem vorgefertigten Bauteil**

(30) Priorität: 05.09.2005 DE 102005042245
(71) Anmelder: Henniges Automotive GmbH & Co. KG, 31547 Rehburg Loccum (DE)
(72) Erfinder: Kreye, Bernhard, 31515 Wunstorf (DE)
(74) Vertreter: Siekmann, Gunnar

(57) **Zusammenfassung**

Zur Verbindung einer Fahrzeugscheibe mit wenigstens einem vorgefertigten Bauteil wird zumindest eine der beiden gegenseitigen Anlageflächen von Fahrzeugscheibe und Bauteil einer Oberflächenbehandlung mittels eines reaktiven gasförmigen Mediums unterzogen. Danach wird zumindest auf eine der gegenseitigen Anlageflächen ein Klebstoff aufgetragen und die Fahrzeugscheibe und das Bauteil werden anschließend zusammengeführt und miteinander verklebt.

## Beschreibung

Die Erfindung betrifft ein Verfahren zur Verbindung einer Fahrzeugscheibe mit wenigstens einem vorgefertigten Bauteil.

Mit Fahrzeugscheiben verbindbare, vorgefertigte Bauteile können z. B. Dichtprofile sein, die einer Abdichtung zwischen Fahrzeugscheibe und Fahrzeugkarosserie dienen. Fahrzeugscheiben werden jedoch auch mit Umrahmungen aus Kunststoffprofilen ausgerüstet, wobei es bekannt ist, Fahrzeugscheiben auch mit vorgefertigten Rahmen zu verbinden. Die Verbindung selbst, erfolgt hauptsächlich durch Kleben mit geeigneten Klebstoffen.

Vor der Verbindung eines vorgefertigten Bauteils mit einer Fahrzeugscheibe bedarf es der Ausführung vorbereitender Arbeiten, die insbesondere das Reinigen der Fahrzeugscheibe, zumindest im Verbindungsbereich, sowie des Bauteils umfassen. Damit Klebstoff an der Fahrzeugscheibe und/oder dem Bauteil optimal haftet, ist es bekannt, die gegenseitigen Anlageflächen mit einem Haftvermittler, einem sogenannten Primer, zu beschichten.

Reinigung und Primerung sind mehr oder weniger kostenintensive Vorbehandlungen, wobei als Nachteil auch noch empfunden wird, daß Reinigungsmittel und Primer *"ausdünsten",* d. h. am Arbeitsplatz in der jeweiligen Werkhalle können Schadstoffe freigesetzt werden.

Der Erfindung liegt die Aufgabe zugrunde, ein Verfahren zur Verbindung einer Fahrzeugscheibe mit einem Bauteil bereitzustellen, bei dem auf Reinigen, Primern und dergleichen kostenintensive Vorbehandlungsarbeiten verzichtet werden kann.

Diese Aufgabe ist durch die Merkmale des Patentanspruchs 1 gelöst. Vorteilhafte Ausgestaltungen und Weiterbildungen ergeben sich aus den Unteransprüchen 2 bis 8.

Bei dem erfindungsgemäßen Verfahren zur Verbindung einer Fahrzeugscheibe mit wenigstens einem vorgefertigten Bauteil ist gemäß dem Kennzeichen des Patentanspruchs 1 vorgesehen, daß zumindest eine der beiden gegenseitigen Anlageflächen von Scheibe und Bauteil einer Oberflächenbehandlung mittels eines reaktiven gasförmigen Mediums unterzogen wird, daß danach zumindest auf eine der gegenseitigen Anlageflächen ein Klebstoff aufgetragen wird, und daß die Fahrzeugscheibe und das Bauteil anschließend zusammengeführt und miteinander verklebt werden.

Da bei Durchführung des erfindungsgemäßen Verfahrens die Vorbehandlungsschritte der Reinigung sowie der Primerung der miteinander zu verbindenden Elemente, der Glasscheibe und der Bauteile entfallen, verringern sich die Produktionszeiten und auch die Freisetzung von Schadstoffen ist nicht mehr gegeben. Sowohl Fahrzeugscheibe als auch das damit zu verbindende vorgefertigte Bauteil haben bei der Verbindung gegenseitig in Kontakt kommende Anlageflächen. Zumindest eine der Anlageflächen wird einer Oberflächenbehandlung mittels eines reaktiven gasförmigen Mediums unterzogen. Es ist auch möglich, beide Anlageflächen oder vorbestimmte Bereiche bzw. Abschnitte einer oder beider Anlageflächen der Oberflächenbehandlung zu unterziehen. Eine solche Oberflächenbehandlung in der erfindungsgemäßen Weise mit Hilfe eines reaktiven gasförmigen Mediums kann dadurch erfolgen, daß das reaktive Medium durch eine elektrische Plasmaentladung mit Hilfe eines Lichtbogens unter Zufuhr eines Arbeitsgases als gebündelter Strahl erzeugt wird: Mit diesem gebündelten Strahl, der bei der elektrischen Plasmaentladung entsteht, kann die jeweilige Anlagefläche von Scheibe und/oder Bauteil beaufschlagt werden.

Die Plasmabehandlung bewirkt, daß beim Kontakt mit der jeweiligen Materialoberfläche Energie auf diese übertragen wird und für nachfolgende Reaktionen, z. B. mit einem Klebstoff, zur Verfügung steht. Die Behandlung der Oberfläche mit einem reaktiven gasförmigen Medium in Form eines potentialfreien Plasma erhöht die Haftungseigenschaften um ein Mehrfaches.

Die Beaufschlagung mit dem gebündelten Strahl innerhalb der Plasmabehandlung kann derart erfolgen, daß eine Düse, aus der der gebündelte Strahl austritt, an der Fahrzeugscheibe und/oder dem damit zu verbindenden Bauteil entlang geführt wird. Umgekehrt, kann eine solche Düse für den gebündelten Strahl zur Plasmabehandlung auch ortsfest gehalten werden, wobei dann die Fahrzeugscheibe und/oder das entsprechende damit zu verbindende Bauteil an der Düse vorbei bewegt werden.

Als gasförmiges Medium zur Durchführung einer Oberflächenbehandlung kann auch der oxidierende Bereich einer Gasflamme verwendet werden. Entweder wird die Gasflamme über den zu behandelnden Bereich einer Oberfläche der Scheibe und/oder des Bauteils geführt oder das Bauteil wird so bewegt, daß die vorbestimmten Bereiche der gegenseitigen Anlagefläche von Scheibe und Bauteil durch den oxidierenden Bereich einer Gasflamme geführt werden. Selbstverständlich ist es auch möglich, mehrere Plasma-Düsen und/oder Gasflammen nebeneinander oder hintereinander einzusetzen.

Bei dem erfindungsgemäßen Verfahren ist des weiteren mit Vorteil die Möglichkeit gegeben, eine sehr dünne, haftverbessernde Schicht, insbesondere auf die Glasscheibe, aufzubringen. Dies kann dadurch erfolgen, daß der Glasflamme eine ein vorbestimmtes Verbrennungsprodukt erzeugende Substanz, insbesondere eine siliziumhaltige Substanz, eindosiert wird. Nach der Plasma- bzw. Gasflammenbehandlung kann das mit einem Kleber versehene Bauteil, ein Profil oder Profilrahmen, unmittelbar, d. h. sofort und ohne weitere Zeitverzögerung auf die Scheibe gebracht und damit verklebt werden.

Die Plasmabehandlung und/oder Gasflammenbehandlung von Scheiben und entsprechenden damit zu verbindenden Bauteilen kann nacheinander in jeweiligen Bearbeitungsstationen durchgeführt werden. Selbstverständlich ist auch die gleichzeitige Durchführung in jeweiligen Bearbeitungsstationen durchführbar. Als Bauteil kann mit besonderem Vorteil ein vorgefertigter Rahmen für eine Fahrzeugscheibe verwendet werden. Der Rahmen bildet ein einteiliges Bauteil und kann als solches mit der Fahrzeugscheibe in erfindungsgemäßer Weise verbunden werden.

Als Klebstoff, der bei der erfindungsgemäßen Verbindung eingesetzt wird, kann ein Schmelzklebstoff verwendet werden. Dabei kann so vorgegangen werden, daß die miteinander zu verbindenden Teile, die Glasscheibe und das jeweilige Bauteil unmittelbar nach Aufbringen des Schmelzklebstoffs zusammengeführt und miteinander verklebt werden. Es ist jedoch auch möglich, den Schmelzklebstoff zunächst aufzubringen und dann unmittelbar vor der Zusammenführung der miteinander zu verbindenden Elemente z. B. durch Erwärmung zu aktivieren. Die Bearbeitungsstationen, in denen die Plasmabehandlung und/oder die Gasflammenbehandlung erfolgt, können in eine Fertigungsstraße integriert werden oder in eine als Karussell ausgebildete Fertigungsstation, bei der die einzelnen Bearbeitungsstationen auf einer Kreisbahn angeordnet sind. Die Glasscheibe, bzw. das Bauteil, kann die einzelnen Bearbeitungsstationen durchlaufen und wird dabei entweder manuell oder von entsprechend ausgestalteten Robot-Mechaniken gehandhabt.

Ein Ausführungsbeispiel des Verfahrensablaufes ist in der Zeichnung schematisch dargestellt. Es zeigen:
- Fig. 1: eine Seitenansicht eines Kraftfahrzeuges mit durch Einkreisung kenntlich gemachter dreieckiger Fahrzeugscheibe,
- Fig. 2: eine Ansicht eines Rahmens für die dreieckige Fahrzeugscheibe gemäß Fig. 1,
- Fig. 3: eine Ansicht eines Profils des Rahmens gemäß Fig. 2 in einem Schnitt entlang der Linie III-III in Fig. 2,
- Fig. 4: eine schematische Schnittansicht eines Teils einer Haltevorrichtung für den Rahmen gemäß Fig. 2,
- Fig. 5: eine Seitenansicht eines Randbereiches einer Fahrzeugscheibe,
- Fig. 6: eine Ansicht entsprechend Fig. 4 nach dem Aufbringen von Klebstoff auf das in die Haltevorrichtung eingelegte Profil des Rahmens gemäß Fig. 2, und
- Fig. 7: die Zusammenführung der Fahrzeugscheibe gemäß Fig. 5 mit dem in die Haltevorrichtung eingelegten Rahmen zwecks Verbindung durch den Klebstoff.

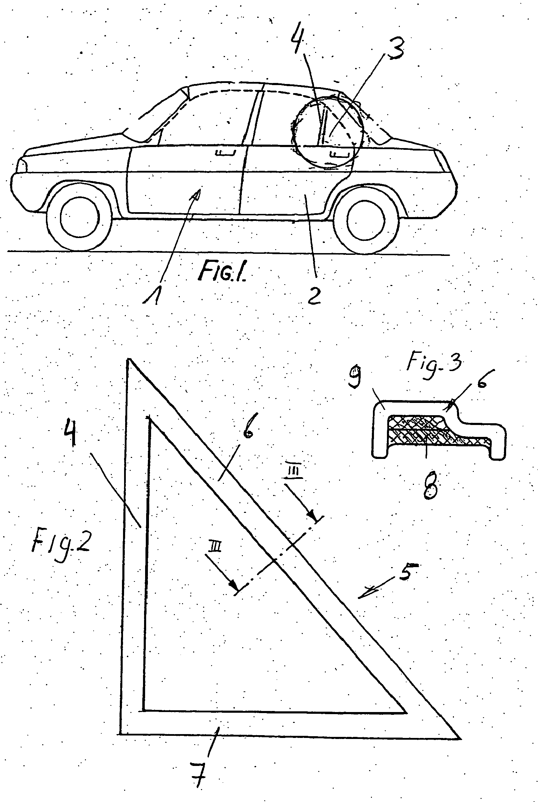

In Fig. 1 ist schematisch ein Kraftfahrzeug 1 in einer Seitenansicht dargestellt. Das Kraftfahrzeug 1 besitzt im Bereich der hinteren Tür 2 ein zweiteiliges Fenster. Ein Teil des Fensters weist eine feste dreieckige Glasscheibe 3 auf, die mit einem Rahmen ausgerüstet ist, von dem hier lediglich das senkrechte Rahmenprofil 4 sichtbar ist.

Das dreieckige Fenster ist durch Einkreisung gekennzeichnet.

Fig. 2 zeigt eine Ansicht des Rahmens 5, mit welcher die dreieckige Fahrzeugscheibe 3 (Fig. 1) ausgerüstet wird, bevor eine Montage, z. B. an der Tür 2 des Kraftfahrzeuges 1, erfolgen kann.

Das lotrechte Rahmenprofil ist in Fig. 2 wieder mit 4 bezeichnet.

Weitere Rahmenprofile des Rahmens 5 sind mit 6 und 7 angegeben.

Durch das Rahmenprofil 6 ist ein Schnitt gelegt. Die Ansicht des Schnittes III-III ist in Fig. 3 dargestellt und zeigt, daß das Rahmenprofil 6 bei diesem Ausführungsbeispiel aus zwei Komponenten, einem harten inneren Kernprofil 8 und einem etwas weicheren Außenprofil 9 besteht. Selbstverständlich kann das Rahmenprofil 6 auch aus einer Werkstoffkomponente bestehen. Die Rahmenprofile können z. B. extrudiert und zum Rahmen zusammengesetzt werden. Sowohl Einzelprofile als auch ein kompletter Rahmen sind bzw. ist mittels entsprechender Formen auch durch z. B. Spritzguß herstellbar.

Bei diesem Ausführungsbeispiel besteht das Kernprofil 8 aus Polypropylen (PP), während das äußere Profil 9 aus TPE gebildet ist. Das gesamte Rahmenprofil 6 kann im Co-Extrusionsverfahren hergestellt und somit letztlich einteilig sein.

Auch geschäumte Werkstoffe sind selbstverständlich für den Rahmen verwendbar.

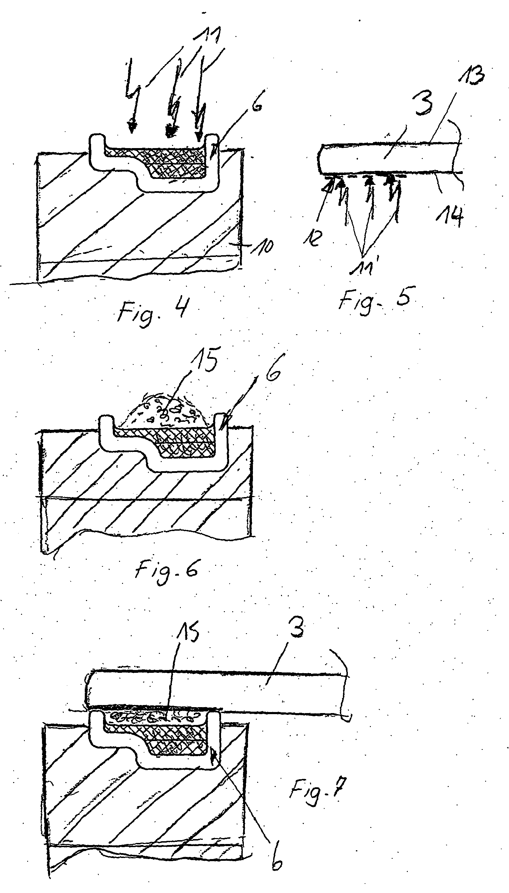

In Fig. 4 ist ein Bereich eines Aufnahmeteils 10 einer nicht weiter dargestellten Haltevorrichtung für den Rahmen 5 dargestellt. Das Aufnahmeteil 10 weist eine Einlegevertiefung für das Rahmenprofil 6 auf, so daß letztlich in die Haltevorrichtung der gesamte Rahmen 5 eingelegt ist, welcher das Bauteil bildet, das es mit der Fahrzeugscheibe 3 zu verbinden gilt.

Der in die Haltevorrichtung eingelegte Rahmen, hier sein Rahmenprofil 6, wird einer durch Pfeile 11 angedeuteten Oberflächenbehandlung mittels eines reaktiven gasförmigen Mediums unterzogen. Das gasförmige reaktive Medium wird durch elektrische Plasmaentladung mit Hilfe eines Lichtbogens unter Zufuhr eines Arbeitsgases als gebündelter Strahl erzeugt, der in Richtung der Pfeile 11 gegen das jeweils zu behandelnde Rahmenprofil 6 gerichtet wird.

Fig. 5 zeigt eine Seitenansicht eines Randbereichs der Fahrzeugscheibe 3 und verdeutlicht durch Pfeile 11', daß der eine Anlagefläche 12 der Glasscheibe 3 an dem Rahmen 5 bildende Teil der beiden Hauptflächen 13 und 14 der Glasscheibe 3 ebenfalls einer Oberflächenbehandlung mittels eines reaktiven gasförmigen Mediums unterzogen wird. Als gasförmiges Medium kann auch der oxidierende Bereich einer Gasflamme verwendet werden, wobei der Gasflamme mit Vorteil eine siliziumhaltige Substanz eindosiert wird.

Bei diesem Ausführungsbeispiel wird die Glasscheibe 3 mit einer Gasflamme behandelt. Die siliziumhaltige Substanz verbrennt und scheidet sich als amorphes Silicatin in Form einer sehr dünnen fest haftenden Schicht auf der Hauptfläche 14 der Glasscheibe 3 im Bereich der Anlagefläche 12 ab. Damit hat sich dort eine chemisch hoch reaktive, haftverbessernde Glasschicht an der Glasscheibe 3 gebildet, die durch eine gestrichelte Linie in Fig. 5 angedeutet ist.

Fig. 6 zeigt eine Ansicht gemäß Fig. 4. Auf das mit gasförmigem Medium oberflächenbehandelte Rahmenprofil 6 des Rahmens 5 ist ein Schmelzklebstoff 15 aufgetragen. Der Schmelzklebstoff 15 kann in Form einer Raupe angebracht werden. Es ist jedoch auch die punktweise Auftragung in Längsrichtung des jeweiligen Rahmenprofils möglich.

Fig. 7 verdeutlicht die Zusammenführung der Glasscheibe 3 mit dem Rahmenprofil 6 des Rahmens 5, sowie die gegenseitige Verklebung mittels Schmelzklebstoff 15.

## Patentansprüche

1. Verfahren zur Verbindung einer Fahrzeugscheibe mit wenigstens einem vorgefertigten Bauteil,
**dadurch gekennzeichnet,**
**daß** zumindest eine der beiden gegenseitigen Anlageflächen von Fahrzeugscheibe (3) und Bauteil einer Oberflächenbehandlung mittels eines reaktiven gasförmigen Mediums unterzogen wird, daß danach zumindest auf eine der gegenseitigen Anlageflächen ein Klebstoff aufgetragen wird und daß die Fahrzeugscheibe (3) und das Bauteil anschließend zusammengeführt und miteinander verklebt werden.

2. Verfahren nach Anspruch 1, **dadurch gekennzeichnet, daß** das gasförmige reaktive Medium durch elektrische Plasmaentladung mit Hilfe eines Lichtbogens unter Zufuhr eines Arbeitsgases als gebündelter Strahl erzeugt wird.

3. Verfahren nach Anspruch 1, **dadurch gekennzeichnet, daß** als gasförmiges Medium der oxidierende Bereich einer Gasflamme verwendet wird.

4. Verfahren nach Anspruch 3, **dadurch gekennzeichnet, daß** der Gasflamme eine ein vorbestimmtes Verbrennungsprodukt erzeugende Substanz eindosiert wird.

5. Verfahren nach Anspruch 4, **dadurch gekennzeichnet, daß** die Substanz eine siliziumhaltige Substanz ist.

6. Verfahren nach einem der Ansprüche 1 bis 5, **dadurch gekennzeichnet, daß** eine Plasmabehandlung und eine Gasflammenbehandlung wenigstens einer der Anlageflächen von Scheibe (3) und Bauteil nacheinander in jeweiligen Bearbeitungsstationen durchgeführt wird.

7. Verfahren nach einem der Ansprüche 1 bis 5, **dadurch gekennzeichnet, daß** Plasmabehandlung und Gasflammenbehandlung wenigstens einer der Anlageflächen von Scheibe (3) und Bauteil gleichzeitig in jeweiligen Bearbeitungsstationen vorgenommen wird.

8. Verfahren nach einem der Ansprüche 1 bis 7, **dadurch gekennzeichnet, daß** als Bauteil ein aus Profilen (4, 6, 7) vorgefertigter Rahmen (5) für eine Fahrzeugscheibe (3) verwendet wird.

9. Verfahren nach einem der Ansprüche 1 bis 8, **dadurch gekennzeichnet, daß** als Klebstoff ein Schmelzklebstoff (15) verwendet wird.
